# EUROPEAN PATENT SPECIFICATION

(11) **EP 4 358 550 B1**
(45) Date of publication and mention of the grant of the patent: **09.09.2026**
(21) Application number: 22845921.0
(22) Date of filing: 19.07.2022
(51) Int. Cl.: H04W 4/06, H04W 72/30, H04W 76/20, H04W 76/14, H04W 76/40, H04W 76/15

(54) **COMMUNICATION METHOD**
KOMMUNIKATIONSVERFAHREN
PROCÉDÉ DE COMMUNICATION

(30) Priority: 19.07.2021 JP 2021119144
(43) Date of publication of application: 24.04.2024
(73) Proprietor: Kyocera Corporation, Kyoto-shi Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2022/028079
(87) International publication number: WO 2023/002988

(56) References cited:
- EP-A1- 3 445 070
- WO-A1-2018/032469
- US-A1- 2017 094 569
- US-A1- 2017 164 407
- ZTE ET AL: "MBMS Service discovery in Carrier aggregation deployment", 3GPP DRAFT; R2-112897 MBMS SERVICE DISCOVERY IN CARRIER AGGREGATION DEPLOYMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495286
- ZTE: "Discussion on the NG-RAN architecture enhancement for MBS", 3GPP DRAFT; R3-204648, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Online; 20200817 - 20200828, 6 August 2020 (2020-08-06), Mobile Competence Centre ; 650, route des Lucioles ; F-06921 Sophia-Antipolis Cedex ; France , XP051911221
- NOKIA, NOKIA SHANGHAI BELL: "Miscellaneous Aspects of MBS", 3GPP DRAFT; R2-2100371, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20210125 - 20210205, 15 January 2021 (2021-01-15), Mobile Competence Centre ; 650, route des Lucioles ; F-06921 Sophia-Antipolis Cedex ; France , XP051973557

## Description

### TECHNICAL FIELD

The present disclosure relates to a communication method used in a mobile communication system.

### BACKGROUND OF INVENTION

The 3rd Generation Partnership Project (3GPP) has been defining technical specifications for New Radio (NR), which is a 5th generation (5G) radio access technology. NR has features such as high speed, large capacity, high reliability, and low latency compared to Long Term Evolution (LTE), which is a 4th generation (4G) radio access technology. Introduction of multicast broadcast services (MBSs) to such a 5G system has been under study.

The technical specifications of the 3GPP define carrier aggregation (CA) in which a user equipment communicates with a plurality of cells of one base station at the same time and dual connectivity (DC) in which a user equipment communicates with two base stations at the same time. One of the two base stations in DC is a master node (MN) and the other is a secondary node (SN).

At present, for the MBS, in the case of CA, a user equipment is assumed to perform MBS reception from a primary cell (PCell) managed by a base station, and in the case of DC, the user equipment is assumed to perform MBS reception from a master cell group (MCG) managed by an MN. Non-Patent Document 1 proposes enabling MBS transmission from a secondary cell group (SCG) managed by an SN to the user equipment.

US 2017/164407 A1 discloses a method for receiving control information for MBMS (Multimedia Broadcast Multicast Service) in a wireless communication system supporting carrier aggregation of a plurality of cells comprising a first cell and a second cell, the method comprising: receiving information for MBSFN (Multicast Broadcast Single Frequency Network) configuration via higher layer signaling, wherein the information comprises information indicating MBSFN subframes, information indicating a first group of subframes within the MBSFN subframes, and information indicating a second group of subframes within the MBSFN subframes; when a PDCCH for notifying a change of an MCCH (Multicast Control Channel) is received in one subframe of the first group of subframes on the first cell, receiving updated MCCH information via a PMCH (Physical Multicast Channel) on the first cell; and when a PDCCH for notifying a change of an MCCH is received in one subframe of the second group of subframes on the first cell, receiving updated MCCH information via PMCH on the second cell. EP 3 445 070 A1 discloses a multicast service receiving method, comprising: receiving, by a terminal device from a first cell, configuration information corresponding to a multimedia broadcast multicast service MBMS, wherein the configuration information corresponding to the MBMS comprises: a cell identity of at least one second cell, and the second cell is used to transmit the MBMS in coordination with the first cell at a same scheduling moment or different scheduling moments; obtaining, by the terminal device, configuration information of the second cell based on the cell identity of the second cell; and receiving, by the terminal device from the second cell, an MBMS traffic channel MTCH based on the configuration information of the second cell. US 2017/094569 A1 discloses a communication control method, comprising: simultaneously performing, by a user terminal, communication with a first cell operating as a main cell, and communication with a second cell operating as a subordinate cell other than the main cell; and transmitting, by the user terminal, to the first cell, a main cell change request for changing the main cell from the first cell to the second cell, wherein in the main cell, blind decoding for a common search space is required, the common search space is set by each of a plurality of cells so that the common search space is applied in common to all user terminals within the corresponding cell, and information associated with system information that is necessary for reception of multicast/broadcast control information is arranged in the common search space. ZTE et al, "MBMS Service discovery in Carrier aggregation deployment", 3GPP TSG-RAN WG2 Meeting #74, R2-112897, 9-13 May 2011, Barcelona, Spain, tries to analyze what is the MBMS service discovery mechanism and describe several methods to realize it.

### CITATION LIST

### NON-PATENT LITERATURE

Non-Patent Document 1: 3GPP Contribution: RWS-210126, "Discussion on MBS enhancement"

### SUMMARY

The present invention provides a communication method according to claim 1, a user equipment according to claim 3, a network apparatus according to claim 4, a mobile communication system according to claim 5, a computer program according to claim 6, and a chipset according to claim 7. Further embodiments of the present invention are disclosed in the dependent claims.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a base station (gNB) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an overview of MBS traffic delivery according to an embodiment.
FIG. 7 is a diagram illustrating delivery modes according to an embodiment.
FIG. 8 is a diagram illustrating a first operation scenario according to an embodiment.
FIG. 9 is a diagram illustrating a second operation scenario according to an embodiment.
FIG. 10 is a diagram illustrating a first operation example according to an embodiment.
FIG. 11 is a diagram illustrating a second operation example according to an embodiment.
FIG. 12 is a diagram illustrating a third operation example according to an embodiment.
FIG. 13 is a diagram illustrating a fourth operation example according to an embodiment.
FIG. 14 is a diagram illustrating a fifth operation example according to an embodiment.
FIG. 15 is a diagram illustrating a sixth operation example according to an embodiment.
FIG. 16 is a diagram illustrating a first example.
FIG. 17 is a diagram illustrating a second example.
FIG. 18 is a diagram illustrating a third example.
FIG. 19 is a diagram illustrating a fourth example.
FIG. 20 is a diagram illustrating a fifth example.
FIG. 21 is a diagram illustrating operations of a MAC entity of a UE according to a sixth example.
FIG. 22 is a diagram illustrating the sixth example.
FIG. 23 is a diagram illustrating a seventh example.
FIG. 24 is a diagram illustrating an eighth example.
FIG. 25 is a diagram illustrating a ninth example.

### DESCRIPTION OF EMBODIMENTS

The current technical specifications of the 3GPP define no mechanism for a user equipment to perform MBS reception from an SCG in DC or a secondary cell (SCell) in CA. Therefore, it is difficult for the user equipment to perform efficient MBS reception from the SCG in DC or the SCell in CA.

Therefore, the present disclosure provides a communication method that enables a user equipment to perform efficient MBS reception from the SCG in DC or the SCell in CA.

A mobile communication system according to an embodiment is described with reference to the drawings. In the description of the drawings, the same or similar parts are denoted by the same or similar reference signs.

### Configuration of Mobile Communication System

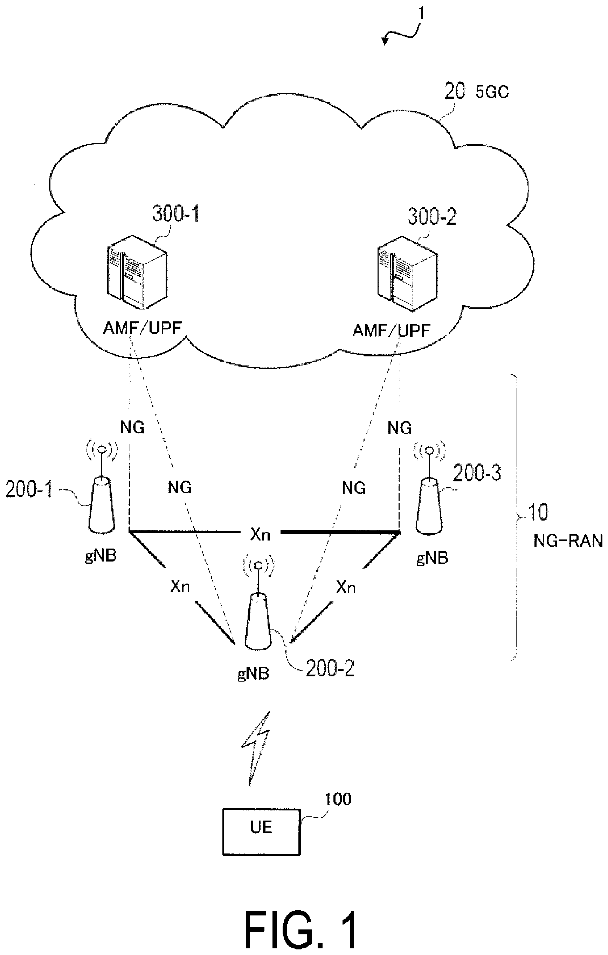

FIG. 1 is a diagram illustrating a configuration of a mobile communication system according to an embodiment. The mobile communication system 1 complies with the 5th Generation System (5GS) of the 3GPP standard. The description below takes the 5GS as an example, but Long Term Evolution (LTE) system may be at least partially applied to the mobile communication system. A 6th generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. Hereinafter, the NG-RAN 10 is simply referred to as the "RAN 10". The 5GC 20 may be simply referred to as a core network (CN) 20.

The UE 100 is a mobile wireless communication apparatus. The UE 100 may be any apparatus as long as utilized by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and/or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

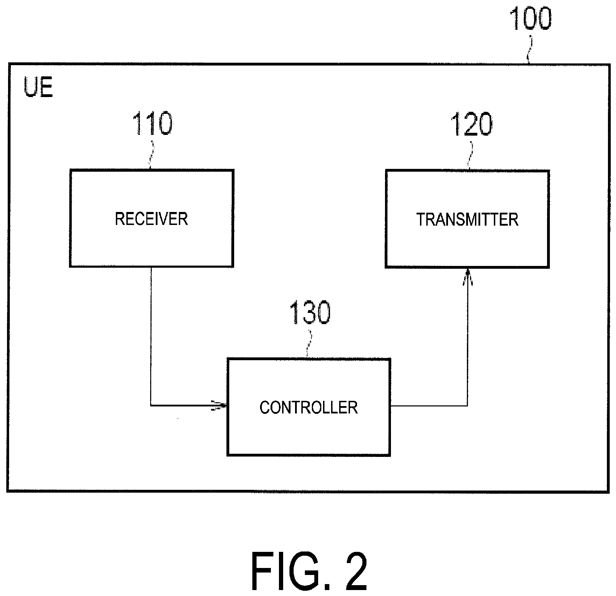

FIG. 2 is a diagram illustrating a configuration of the UE 100 (user equipment) to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control and processes in the UE 100. Such processing includes processing of each layer to be described below. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

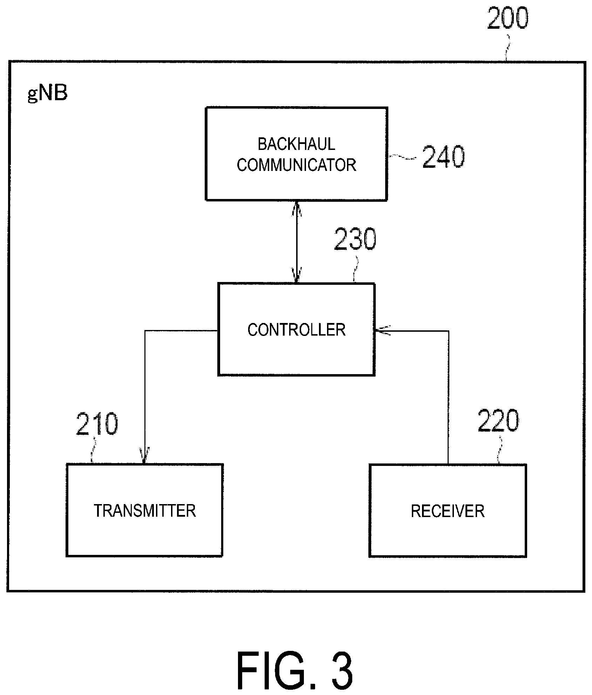

FIG. 3 is a diagram illustrating a configuration of the gNB 200 (base station) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of control and processes in the gNB 200. Such processing includes processing of each layer to be described below. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

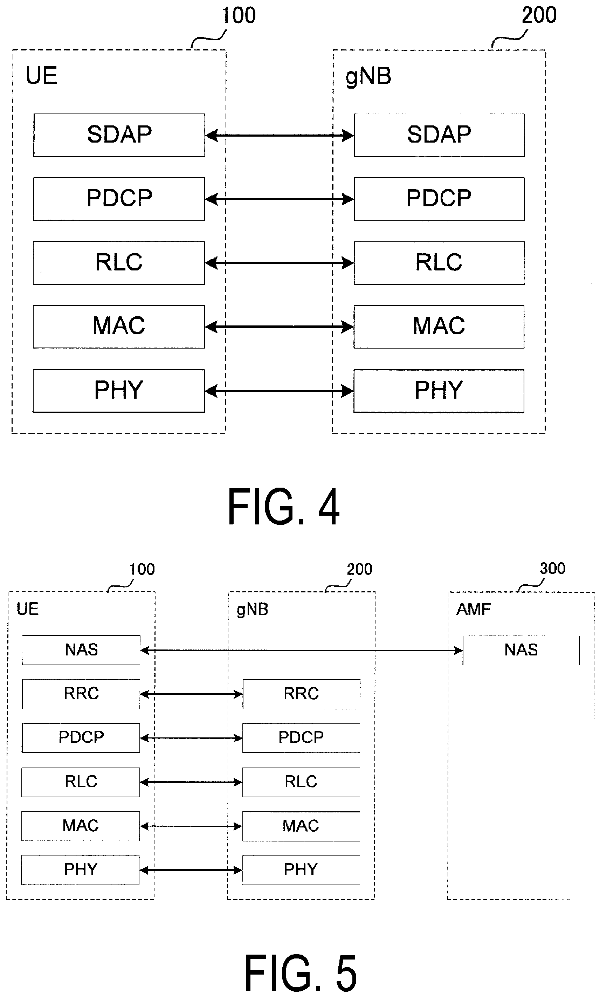

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel. The PHY layer of the UE 100 receives downlink control information (DCI) transmitted from the gNB 200 over a physical downlink control channel (PDCCH). Specifically, the UE 100 blind decodes the PDCCH using a radio network temporary identifier (RNTI) and acquires successfully decoded DCI as DCI addressed to the UE 100. The DCI transmitted from the base station 200 is appended with CRC parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When that the connection between the RRC of the UE 100 and the RRC of the gNB 200 is suspended, the UE 100 is in an RRC inactive state.

The NAS layer which is positioned upper than the RRC layer performs session management, mobility management, and the like. NAS signaling is transmitted between the NAS layer of the UE 100 and the NAS layer of the AMF 300a.

Note that the UE 100 includes an application layer other than the protocol of the radio interface.

### Overview of MBS

An overview of the MBS according to an embodiment will be provided. The MBS is a service in which the NG-RAN 10 can provide broadcast or multicast, i.e., Point To Multipoint (PTM) data transmission to the UE 100. Use cases (service types) of the MBS are assumed to include public safety communication, mission critical communication, Vehicle to Everything (V2X) communication, IPv4 or IPv6 multicast delivery, Internet Protocol TeleVision (IPTV), group communication, and software delivery.

A broadcast service provides a service to every UE 100 within a particular service area for an application not requiring highly reliable QoS. An MBS session used for the broadcast service is referred to as a broadcast session.

A multicast service provides a service not to every UE 100, but to a group of UEs 100 participating in the multicast service. An MBS session used for the multicast service is referred to as a multicast session. The multicast service can provide the same content to the group of UEs 100 through a method with higher radio efficiency than the broadcast service.

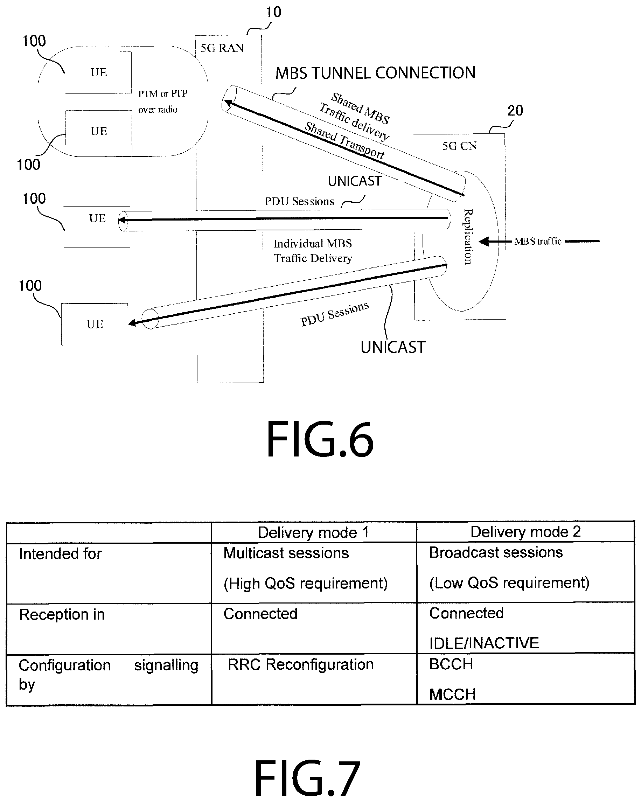

FIG. 6 is a diagram illustrating an overview of MBS traffic delivery according to an embodiment.

As illustrated in FIG. 6, MBS traffic (MBS data) is delivered from a single data source (application service provider) to a plurality of UEs. The 5G CN (5GC) 20, which is a 5G core network, receives the MBS data from the application service provider and performs Replication of the MBS data to deliver the resultant.

From the perspective of the 5GC 20, two multicast delivery methods are possible: 5GC Shared MBS Traffic delivery and 5GC Individual MBS Traffic delivery.

In the 5GC individual MBS traffic delivery method, the 5GC 20 receives a single copy of MBS data packets and delivers individual copies of these MBS data packets to the individual UEs 100 via PDU sessions of the individual UEs 100. Thus, one PDU session for each UE 100 needs to be associated with a multicast session.

In the 5GC shared MBS traffic delivery method, the 5GC 20 receives a single copy of MBS data packets and delivers the single copy of the MBS packets to a RAN node (i.e., gNB 200). The gNB 200 receives the MBS data packets via the MBS tunnel connection and delivers the MBS data packets to one or more UEs 100.

From the perspective of the RAN (5G RAN) 10, two delivery methods are possible for radio transmission of the MBS data in the 5GC shared MBS traffic delivery method: a Point-to-Point (PTP) delivery method and a Point-to-Multipoint (PTM) delivery method. PTP refers to unicast and PTM refers to multicast and broadcast.

In the PTP delivery method, the gNB 200 wirelessly delivers the individual copies of the MBS data packets to the individual UEs 100. On the other hand, in the PTM delivery method, the gNB 200 wirelessly delivers the single copy of the MBS data packets to a group of the UEs 100. The gNB 200 can dynamically determine whether to use the PTM or PTP delivery method as a method for delivering the MBS data to one UE 100.

The PTP and PTM delivery methods are mainly related to the user plane. Control modes for the MBS data delivery include two delivery modes: a first delivery mode and a second delivery mode. FIG. 7 is a diagram illustrating delivery modes according to an embodiment.

As illustrated in FIG. 7, the first delivery mode (Delivery mode 1) is a delivery mode that can be used by the UE 100 in the RRC connected state, and is a delivery mode for high QoS requirements. The first delivery mode is used for multicast sessions among MBS sessions. However, the first delivery mode may also be used for broadcast sessions. The first delivery mode may be available to the UE 100 in the RRC idle state or the RRC inactive state.

In an embodiment, an MBS reception configuration in the first delivery mode is performed through UE-dedicated signaling. For example, the MBS reception configuration in the first delivery mode is performed through an RRC Reconfiguration message (or an RRC Release message), which is an RRC message unicast from the gNB 200 to the UE 100.

The MBS reception configuration includes MBS traffic channel configuration information (hereinafter referred to as "MTCH configuration information") about configuration of an MBS traffic channel carrying MBS traffic. The MTCH configuration information includes MBS session information relating to an MBS session and scheduling information of an MBS traffic channel corresponding to the MBS session. The scheduling information of the MBS traffic channel may include a discontinuous reception (DRX) configuration of the MBS traffic channel. The discontinuous reception configuration may include one or more parameters of a timer value (On Duration Timer) defining an On Duration (reception period), a timer value (Inactivity Timer) extending the On Duration, a scheduling interval or DRX cycle (Scheduling Period, DRX Cycle), an offset value (Start Offset, DRX Cycle Offset) of a start subframe of the scheduling or DRX cycle, a start delay slot value (Slot Offset) of the On Duration Timer, a timer value (Retransmission Timer) defining a maximum time until retransmission, and a timer value (HARQ RTT Timer) defining a minimum interval until DL assignment of HARQ retransmission.

Note that the MBS traffic channel is a type of logical channel and may be referred to as an MTCH. The MBS traffic channel is mapped to a downlink shared channel (DL-SCH) that is a type of transport channel.

The second delivery mode (Delivery mode 2) is a delivery mode that can be used not only by the UE 100 in the RRC connected state, but also by the UE 100 in the RRC idle state or the RRC inactive state, and is a delivery mode for low QoS requirements. The second delivery mode is used for broadcast sessions among MBS sessions. However, the second delivery mode may also be applicable to multicast sessions.

An MBS reception configuration in the second delivery mode is performed through broadcast signaling. For example, the configuration of the MBS reception in the second delivery mode is performed by a logical channel broadcasted from the gNB 200 to the UE 100, for example, a broadcast control channel (BCCH) and/or a multicast control channel (MCCH). The UE 100 may receive the BCCH and the MCCH using a dedicated RNTI predefined in the technical specifications, for example. The RNTI for BCCH reception may be the SI-RNTI and the RNTI for MCCH reception may be the MCCH-RNTI.

In the second delivery mode, the UE 100 may receive the MBS data in the following three procedures. First, the UE 100 receives MCCH configuration information through an SIB (MBS-SIB) transmitted on the BCCH from the gNB 200. Second, the UE 100 receives the MCCH from the gNB 200 based on the MCCH configuration information. The MCCH carries MTCH configuration information. Third, the UE 100 receives the MTCH (MBS Data) based on the MTCH configuration information. Hereinafter, the MTCH configuration information and/or the MCCH configuration information may be referred to as MBS configuration information.

In the first delivery mode and the second delivery mode, the UE 100 may receive the MTCH using a group RNTI (G-RNTI) allocated from the gNB 200. The G-RNTI corresponds to the MTCH reception RNTI.

The network can provide different MBS services for different MBS sessions. The MBS session is identified by at least one selected from the group consisting of a TMGI (Temporary Mobile Group Identity), a source specific IP multicast address (including a source unicast IP address of an application function, an application server, or the like and an IP multicast address indicating a destination address), a session identifier, and a G-RNTI. At least one selected from the group consisting of the TMGI, the source specific IP multicast address, and the session identifier is referred to as an MBS session identifier (MBS session ID). The TMGI, the source specific IP multicast address, the session identifier, and the G-RNTI are collectively referred to MBS session information.

### Operation of Mobile Communication System

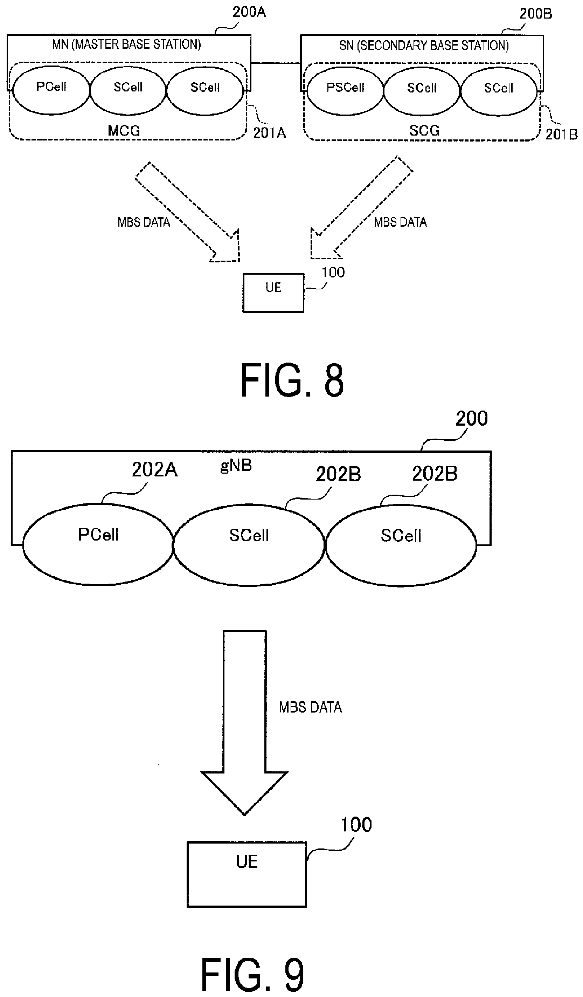

FIG. 8 is a diagram illustrating a first operation scenario according to an embodiment. The first operation scenario is a scenario in which the UE 100 performs DC for communication with two base stations (MN 200A and SN 200B) at the same time. The MN 200A may be an NR base station (gNB) or may be an LTE base station (eNB). The MN (master node) 200A may be referred to as a master base station. The SN 200B may be an NR base station (gNB) or an LTE base station (eNB). The secondary node (SN) 200B may be referred to as a secondary base station.

To the UE 100 in the RRC connected state, radio resources are allocated from the schedulers of the MN 200A and the SN 200B connected to each other via a backhaul (network interface), and radio communication is performed using the radio resources of the MN 200A and the radio resources of the SN 200B. The network interface between the MN 200A and the SN 200 may be an Xn interface or an X2 interface. The MN 200A and the SN 200 communicate with each other via the network interface.

The MN 200A may include a control plane connection with the core network. The MN 200A provides main radio resources for the UE 100. The MN 200A manages an MCG 201A. The MCG 201A is a group of serving cells associated with the MN 200A. The MCG 201A includes a PCell and optionally includes one or more SCells.

The SN 200B need not include a control plane connection with the core network. The SN 200B provides additional radio resources to the UE 100. The SN 200B manages an SCG 201B. The MCG 201A includes a primary-secondary cell (PSCell) and optionally includes one or more SCells.

At present, for the MBS, in the case of DC, the UE 100 is assumed to perform MBS reception from the MCG 201A managed by the MN 200A. In an embodiment, MBS transmission is performed from the SCG 201B managed by the SN 200B to the UE 100. To be specific, the SN 200B supports multicast or broadcast transmission (PTM transmission) of MBS data. The UE 100 performs MBS reception from either the MN 200A (MCG 201A) or the SN 200B (SCG 201B).

FIG. 9 is a diagram illustrating a second operation scenario according to an embodiment. The second operation scenario is a scenario in which the UE 100 performs CA in which the UE 100 communicates with a plurality of serving cells of one base station (gNB 200) at the same time. The plurality of serving cells includes a PCell 202A and one or more SCells 202B.

The PCell 202A provides NAS mobility information to the UE 100 upon establishment, re-establishment or handover of an RRC connection of the UE 100 and provides security information upon re-establishment or handover of the RRC connection of the UE 100. The SCell 202B forms a set of serving cells together with the PCell 202A.

At present, for the MBS, in the case of CA, the UE 100 is assumed to perform MBS reception from the PCell 202A. In an embodiment, MBS transmission from the SCell 202B to the UE 100 is performed. Specifically, the SCell 202B supports multicast or broadcast transmission (PTM transmission) of MBS data. The UE 100 performs MBS reception from either the PCell 202A or the SCell 202B.

Hereinafter, an operation will be described that is used to enable the UE 100 to perform efficient MBS reception from the SCG 201B in DC or the SCell 202B in CA.

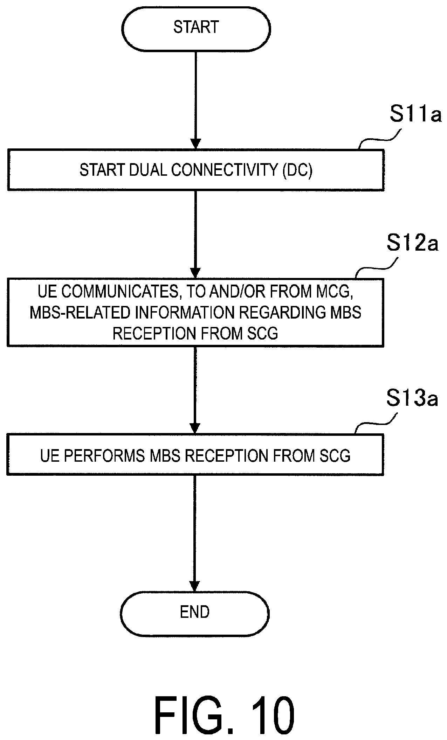

FIG. 10 is a diagram illustrating a first operation example according to an embodiment. The first operation example is an operation example related to the above-described first operation scenario (scenario in which DC is performed).

In step S11a, the UE 100 starts DC as illustrated in FIG. 8. For example, the MCG 201A (MN 200A) configures the UE 100 with the SCG 201B to activate the SCG 201B.

In step S12a, the UE 100 that is to perform DC communicates with the MCG 201A. Here, the UE 100 communicates, to and/or from the SCG 201B, MBS-related information regarding MBS reception from the MCG 201A.

In step S13a, the UE 100 performs MBS reception from the SCG 201B. Step S13a may be performed before step S12a.

Thus, the UE 100 that is to perform DC communicates, to and/or from the MCG 201A, MBS-related information regarding the MBS reception from the SCG 201B. This enables the UE 100 to perform efficient MBS reception from the SCG 201B under the management of MCG 201A (MN 200A).

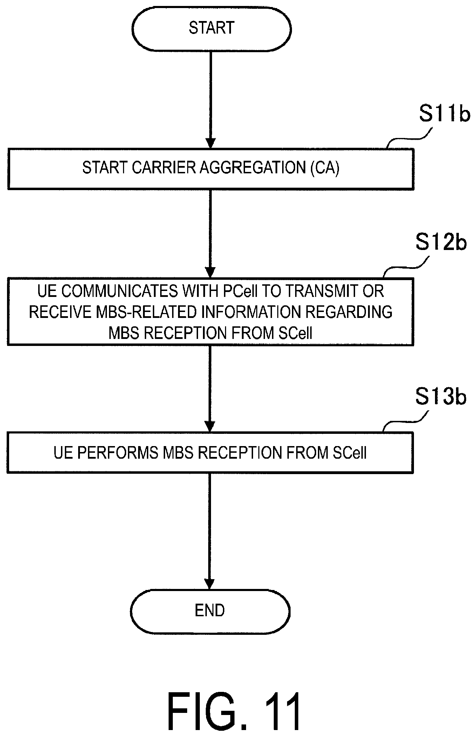

FIG. 11 is a diagram illustrating a second operation example according to an embodiment. The second operation example is an operation example related to the above-described second operation scenario (scenario in which CA is performed).

In step S11b, the UE 100 starts CA as illustrated in FIG. 9. For example, the PCell 202A (gNB 200) configures the UE 100 with the SCell 202B to activate the SCell 202B.

In step S12b, the UE 100 that is to perform CA communicates with the PCell 202A. Here, the UE 100 communicates, to and/or from the PCell 202A, MBS-related information regarding MBS reception from the SCell 202B.

In step S13b, the UE 100 performs MBS reception from the SCell 202B. Step S13b may be performed before step S12b.

Thus, the UE 100 that is to perform CA communicates, to and/or from the PCell 202A, MBS-related information regarding the MBS reception from the SCell 202B. Thus, the UE 100 can perform efficient MBS reception from the SCell 202B under the management of the PCell 202A.

In the first operation example and the second operation example described above, the MCG 201A and the PCell 202A play the same and/or similar role, and the SCell 202B and SCell 202B play the same and/or similar role. Hereinafter, when DC and CA are not distinguished from each other, the MCG 201A or the PCell 202A is referred to as the MCG 201A/PCell 202A, and the SCell 202B or the SCell 202B is referred to as the SCell 202B/SCell 202B. When steps S11a and S11b are not distinguished from each other, these steps are simply referred to as step S11, when steps S12a and S12b are not distinguished from each other, these steps are simply referred to as step S12, and when steps S13a and S13b are not distinguished from each other, these steps are simply referred to as step S13.

Step S12 may be a step in which UE 100 receives the MBS-related information from MCG 201A/PCell 202A. The UE 100 may receive the MBS-related information from the MCG 201A/PCell 202A via an RRC Reconfiguration message, a paging message, an SIB (BCCH), an MCCH, a MAC control element (CE), or downlink control information (DCI) from the MCG 201A/PCell 202A.

The MBS-related information received by the UE 100 may include at least one selected from the group consisting of MBS session information indicating an MBS session provided by the SCG 201B/SCell 202B, frequency-related information regarding the frequency at which the corresponding MBS session is provided, MBS configuration information indicating a configuration of MBS reception, and cell identification information indicating the SCG 201B/SCell 202B. Thus, the UE 100 can perform smooth MBS reception from the SCG 201B/SCell 202B.

The MBS-related information received by the UE 100 from the MCG 201A/PCell 202A may be a session start notification indicating the start of an MBS session in the SCG 201B/SCell 202B. Thus, the UE 100 can start MBS reception in the SCG 201B/SCell 202B in synchronization with the start of the MBS session in the SCG 201B/SCell 202B. The MBS-related information received by the UE 100 from MCG 201A/PCell 202A may be session change information (session change notification) indicating a change of the MBS session in the SCG 201B/SCell 202B or a session stoppage notification indicating the stoppage of the MBS session. The stoppage of the MBS session may be informed as notification of session change information.

The MBS-related information received by the UE 100 the from MCG 201A/PCell 202A may be MTCH configuration information regarding the MTCH in the SCG 201B/SCell 202B. Thus, the UE 100 can receive the MTCH from the SCG 201B/SCell 202B without receiving the MTCH configuration information from the SCG 201B/SCell 202B. In the case of DC, the MTCH configuration information transmitted by the MCG 201A (MN 200A) may be acquired from the SCG 201B (SN 200B). In other words, the SN 200B managing the SCG 201B may use the network interface (Xn, X2, or the like) to transmit the MTCH configuration information to the MN 200A managing the MCG 201A.

The MBS-related information received by the UE 100 the from MCG 201A/PCell 202A may be MCCH configuration information regarding the MCCH in the SCG 201B/SCell 202B. Thus, the UE 100 can receive the MCCH from the SCG 201B/SCell 202B without receiving the MCCH configuration information from the SCG 201B/SCell 202B. In the case of DC, the MCCH configuration information transmitted by the MCG 201A (MN 200A) may be acquired from the SCG 201B (SN 200B). In other words, the SN 200B managing the SCG 201B may use the network interface (Xn, X2, or the like) to transmit the MCCH configuration information to the MN 200A managing the MCG 201A. Hereinafter, the MTCH configuration information and/or the MCCH configuration information may be referred to as MBS configuration information.

The MBS-related information received by the UE 100 from the MCG 201A/PCell 202A may be notification information indicating that the MBS configuration information indicating the configuration of MBS reception in the SCG 201B/SCell 202B is transmitted from the SCG 201B/SCell 202B. Thus, the UE 100 can recognize that the MCG 201A/PCell 202A does not provide the MBS configuration information of the SCG 201B/SCell 202B.

Step S12 may be a step in which the UE 100 transmits the MBS-related information to the MCG 201A/PCell 202A. The UE 100 may transmit the MBS-related information to the MCG 201A/PCell 202A through an RRC message, a MAC CE, a PDCP control protocol data unit (PDU), or uplink control information (UCI).

The MBS-related information transmitted by the UE 100 to the MCG 201A/PCell 202A may include at least one selected from the group consisting of MBS session information indicating an MBS session that the UE 100 is receiving or is interested in receiving, frequency-related information regarding the frequency at which the MBS session is provided, and priority information indicating whether the UE 100 gives priority to MBS reception or unicast reception. Thus, the MCG 201A/PCell 202A can recognize the interest of the UE 100 in the MBS.

The MBS-related information transmitted by the UE 100 to the MCG 201A/PCell 202A may be an MBS Interest Indication (MII) for the MBS session that UE 100 is receiving or is interested in receiving. The MII includes at least one selected from the group consisting of MBS session information indicating the MBS session that the UE 100 is receiving or is interested in receiving, frequency-related information regarding the frequency at which the MBS session is provided, and priority information indicating whether the UE 100 gives priority to MBS reception or unicast reception.

The UE 100 may transmit the MII to the MCG 201A when the MCG 201A provides the MBS session that the UE 100 is receiving or is interested in receiving. Alternatively, when the SCG 201B/SCell 202B provides the MBS session that UE 100 is receiving or is interested in receiving, the UE 100 may transmit, to MCG 201A/PCell 202A, the MII indicating that the SCG 201B/SCell 202B provides the MBS session.

In the case of DC, the MBS-related information (e.g., MII) received by the MCG 201A (MN 200A) from the UE 100 is preferably shared with the SCG 201B (SN 200B). Therefore, the MN 200A that manages the MCG 201A may use the network interface (Xn, X2, or the like) to transmit the MBS-related information (for example, MII) received from the UE 100 to the SN 200B that manages the SCG 201B.

The MBS-related information transmitted from the UE 100 to the MCG 201A/PCell 202A may be MBS reception gap information indicating a timing (hereinafter referred to as an "MBS reception gap") at which the UE 100 interrupts communication with the SCG 201B/SCell 202B and performs MBS reception from the MCG 201A/PCell 202A. Thus, the UE 100 can perform efficient MBS reception from the MCG 201A/PCell 202A using the MBS reception gap while maintaining connection with the SCG 201B/SCell 202B.

The MBS-related information transmitted by the UE 100 to the MCG 201A/PCell 202A may be information for the UE 100 to receive MBS-data retransmission from the SCG 201B/SCell 202B (or the MCG 201A/PCell 202A). The information indicates a packet that has been successfully received by the PDCP layer and/or has failed to be received by the PDCP layer, and may be, for example, a PDCP status report. The PDCP Status Report may include one or more of First Missing Packet (FMC: sequence number information of a packet that fails to be received first) and Bitmap (bitmap information indicating success/failure of packet reception after the FMC). The information may be shared between the MN 200A and the SCell 202B (MN 200A may send the information to the SN 200B).

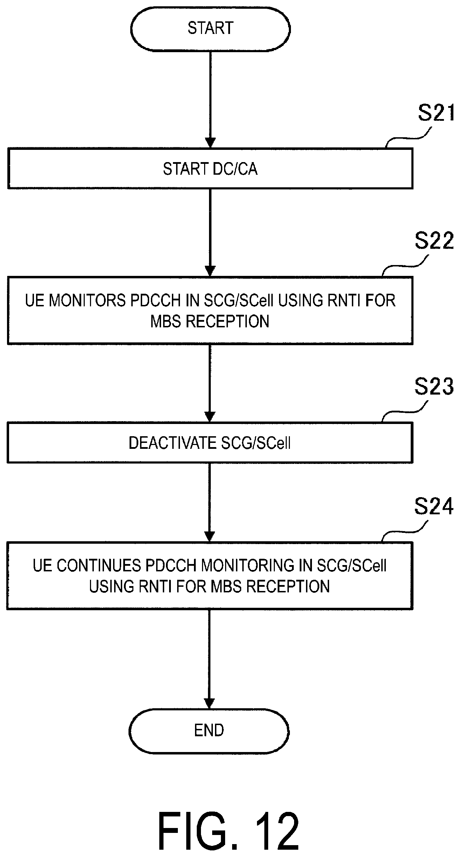

FIG. 12 is a diagram illustrating a third operation example according to an embodiment. The third operation example is an operation example in which in a scenario with DC or CA performed, the UE 100 monitors a physical downlink control channel (PDCCH) of the SCG 201B/SCell 202B.

In step S21, the UE 100-1 starts DC or CA.

In step S22, the UE 100 that is to perform MBS reception in the SCG 201B/SCell 202B monitors the PDCCH in the SCG 201B/SCell 202B using the RNTI used to perform MBS reception in the SCG 201B/SCell 202B. The RNTI used to perform MBS reception is referred to as an RNTI for MBS reception. The RNTI for MBS reception may be at least one selected from the group consisting of an RNTI for the MTCH used to receive the MTCH, an RNTI for the MCCH used to receive the MCCH, and an RNTI for a change notification used to receive the MCCH change notification.

In step S23, the SCG 201B/SCell 202B is deactivated. For example, the UE 100 deactivates the SCG 201B/SCell 202B in response to the SCG 201B/SCell 202B receiving the deactivation instruction from the MCG 201A/PCell 202A through the MAC CE.

In step S24, the UE 100 continues to monitor the PDCCH in the SCG 201B/SCell 202B using the MBS reception RNTI even when the SCG 201B/SCell 202B is deactivated.

This allows the UE 100 to continue MBS reception in the SCG 201B/SCell 202B even when the SCG 201B/SCell 202B is deactivated.

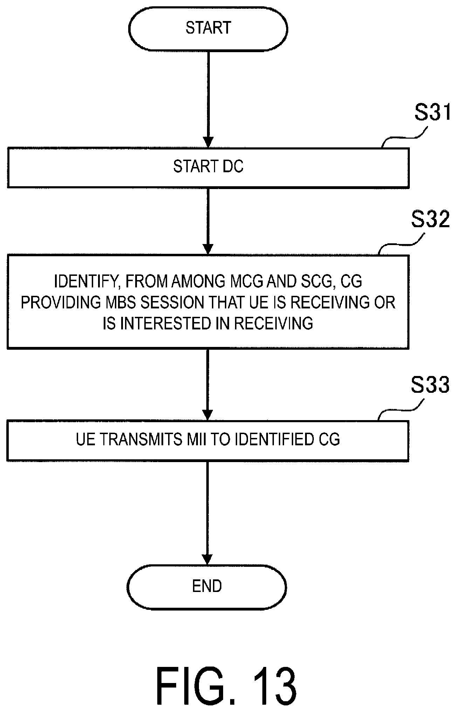

FIG. 13 is a diagram illustrating a fourth operation example according to an embodiment. The fourth operation example is an operation example in which in a scenario with DC performed, the UE 100 transmits the MII.

In step S31, the UE 100 starts DC.

In step S32, the UE 100 identifies, from among the MCG 201A and the SCG 201B, a cell group (CG) providing an MBS session that the UE 100 is receiving or is interested in receiving.

In step S33, the UE 100 transmits the MII related to the MBS session to the cell group identified in step S32.

This allows the UE 100 to transmit the MII to an appropriate CG under the assumption that UE 100 can receive the MBS data from the SCG 201B.

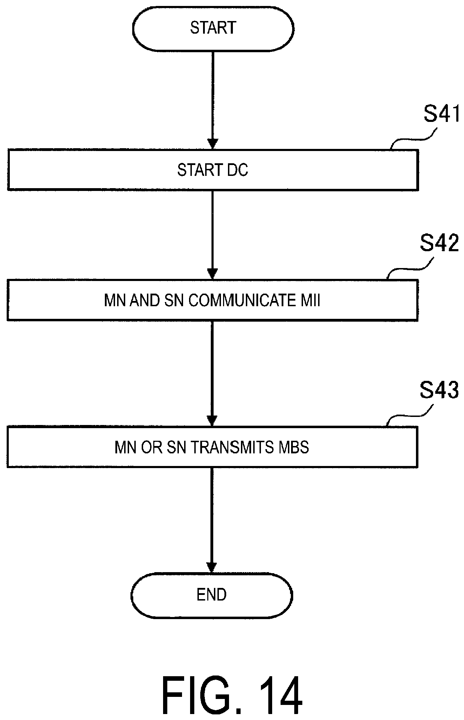

FIG. 14 is a diagram illustrating a fifth operation example according to an embodiment. The fifth operation example is an operation example in which in a scenario with DC performed, the MN 200A and the SN 200B communicate with each other.

In step S41, the UE 100 starts DC.

In step S42, the MN 200A communicates with the SN 200B. The MN 200A may obtain the MII related to the MBS session that the UE 100 is receiving or is interested in receiving and transmit the MII to the SN 200B. Alternatively, when the SN 200B obtains the MII of the UE 100, the MN 200A may receive the MII from the SN 200B. Step S42 may be performed before step S41.

In step S43, the MCG 201A (MN 200A) or the SCG 201B (SN 200B) performs MBS transmission to the UE 100.

The MCG 201A (MN 200A) and the SCG 201B (SN 200B) share the interest of the UE 100 in the MBS, enabling efficient communication with the UE 100 in consideration of the MBS interest.

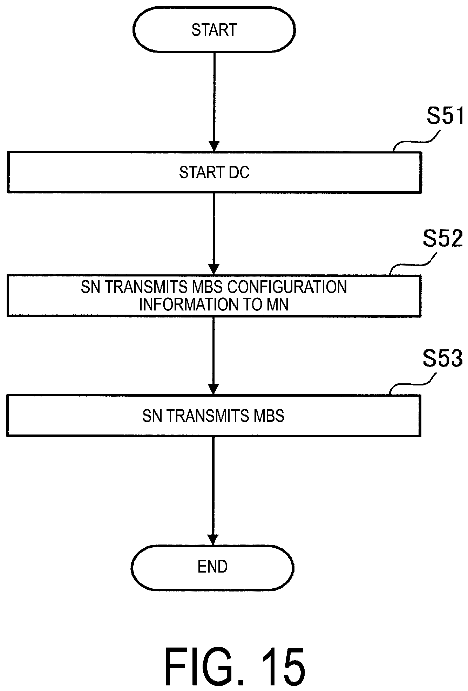

FIG. 15 is a diagram illustrating a sixth operation example according to an embodiment. The sixth operation example is an operation example in which in a scenario with DC performed, the MN 200A and the SN 200B communicate with each other.

In step S51, the UE 100 starts DC.

In step S52, the SN 200B communicates with the MN 200A. The SN 200B transmits, to the MN 200A, the MBS configuration information indicating the configuration for the UE 100 to perform MBS reception in the SCG 201B.

In step S53, the SN 200B performs MBS transmission to the UE 100.

Thus, with the MBS configuration information of the SN 200B shared with the MN 200A, the MN 200A can perform efficient communication with the UE 100 in consideration of the MBS configuration information. For example, the MN 200A performs scheduling or activation/deactivation control of the SN 200B/SCG 201B in consideration of the MBS configuration information of the SCell 202B. The MN 200A may transmit the MBS configuration information of the SN 200B to the UE 100.

### Example

Given the embodiment described above, a first to a ninth examples will be described. These examples can not only be separately and independently implemented, but can also be implemented in combination of two or more thereof. In an operation flow of each example described below, all the steps may not be necessarily performed, and only a part of the steps may be performed. In an operation flow of each example described below, the order of the steps may be changed. In the following example, the MCG 201A may be interpreted as the MN 200A, the SCG 201B may be interpreted as the SN 200B, and the PCell 202A may be interpreted as the base station (gNB 200).

### (1) First Example

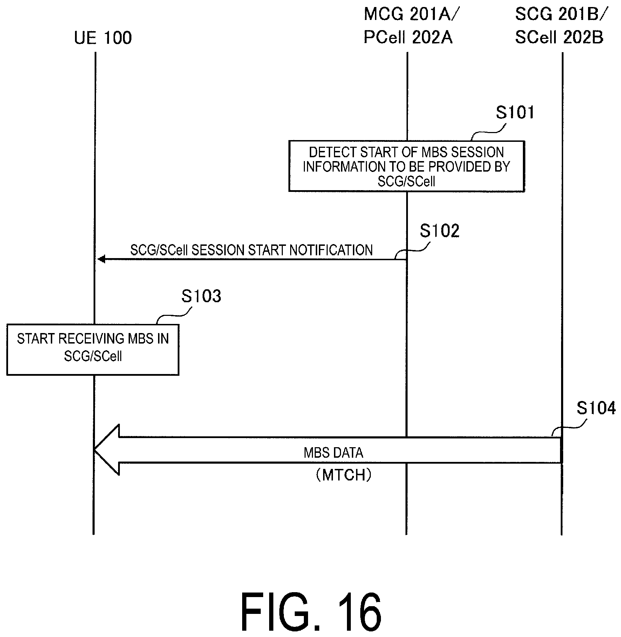

FIG. 16 is a diagram illustrating a first example. Here, DC or CA is assumed to have been started, with the UE 100 waiting for the start of an MBS session to be provided from the SCG 201B/SCell 202B.

In step S101, the MCG 201A/PCell 202A detects the start of the MBS session to be provided by the SCG 201B/SCell 202B. In the case of CA, the PCell 202A and the SCell 202B belong to the same gNB 200, and thus the gNB 200 can recognize the start of the MBS session to be provided by the SCell 202B. In the case of DCs, the MCG 201A (MN 200A) may obtain session start information from the AMF 300 (core network) and/or from the SN 200B.

In step S102, the MCG 201A/PCell 202A notifies the UE 100 of the start of the MBS session of the SCG 201B/SCell 202B via the RRC Reconfiguration message, the paging message, the SIB, or the MCCH. The notification (session start notification) includes at least one of the following pieces of information.

### MBS session information

The information indicating the MBS session to be provided by the SCG 201B/SCell 202B includes, for example, a session ID, a TMGI, a source specific IP multicast address, a G-RNTI, etc.

### Frequency-related information

For example, this information is at least one selected from the group consisting of frequency information indicating the frequency (carrier frequency) at which the MBS session scheduled to be provided by the SCG 201B/SCell 202B is provided, BWP information indicating a bandwidth part (BWP) at which the MBS session is provided, and CFR information indicating a CFR (Common Frequency Resource) in which the MBS session is provided.

### MBS configuration information of SCG 201B/SCell 202B

For example, this information is the MCCH configuration information and/or MTCH configuration information of the SCG 201B/SCell 202B.

### (c) Cell Identification Information of SCG 201B/SCell 202B

For example, this information is the cell ID or cell index of the SCG 201B/SCell 202B. For the SCG 201B, this information may be the cell ID or cell index of the PSCell.

In step S103, upon reception of the session start notification, the UE 100 starts MBS reception in the SCG 201B/SCell 202B. For example, the UE 100 may switch, to an ON state, a reception device (reception circuit, RF circuit) used to perform MBS reception in the SCG 201B/SCell 202B. In other words, the UE 100 may maintain, in an Off state, the reception device used to perform MBS reception in the SCG 201B/SCell 202B, until the UE 100 receives, from the MCG 201A/PCell 202A, the session start notification for the SCG 201B/SCell 202B. This reduces the power consumption of the UE 100. Alternatively, in response to reception of the session start notification for the SCG 201B/SCell 202B from the MCG 201A/PCell 202A, the UE 100 may start PDCCH monitoring for the SCG 201B/SCell 202B using the RNTI for MBS while maintaining the reception device in the On state.

In step S104, based on the session start notification received from the MCG 201A/PCell 202A, the UE 100 receives MTCH (MBS data) from the SCG 201B/SCell 202B.

Thus, according to the first example, the MCG 201A/PCell 202A notifies the UE 100 of the start of the MBS session of the SCG 201B/SCell 202B. This allows the UE 100 to perform efficient MBS reception in the SCG 201B/SCell 202B.

Note that the MCG 201A/PCell 202A may notify the UE 100 of the session change or session stoppage in the SCG 201B/SCell 202B. Thus, the UE 100 can recognize the session change or the session stoppage in the SCG 201B/SCell 202B. Such a session change notification or a session stoppage notification may be transmitted in the same manner as the above-described session start notification and may include the same information elements as the above-described session start notification.

The MCG 201A/PCell 202A may notify the UE 100 that the MBS-SIB of the SCG 201B/SCell 202B has been changed (or a value tag of the MBS-SIB of the SCG 201B/SCell 202B). Thus, the UE 100 can recognize the change of the MBS-SIB of the SCG 201B/SCell 202B.

### (2) Second Example

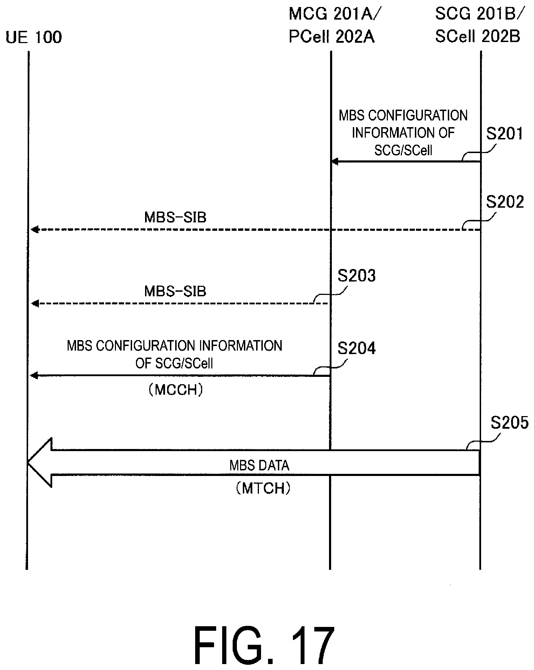

FIG. 17 is a diagram illustrating a second example. Here, DC or CA is assumed to have been started.

In step S201, the SCG 201B/SCell 202B shares the MBS configuration information of the SCG 201B/SCell 202B with the MCG 201A/PCell 202A. For example, the SCG 201B (SN 200B) transmits the MBS configuration information of the SCG 201B to the MCG 201A (MN 200A). The SCG 201B (SN 200B) may transmit the MBS configuration information of the SCG 201B (SN 200B) to the MCG 201A (MN 200A) by using, as a trigger, a change in the MBS configuration of the SCG 201B (SN 200B) or a query from the MN 200A.

The SCG 201B (SN 200B) may request the MCG 201A (MN 200A) to transmit the MBS configuration information from the MCG 201A (MN 200A). When accepting the request, the MCG 201A (MN 200A) may transmit, to the SCG 201B (SN 200B), a response indicating the acceptance of the request.

In step S202, the SCG 201B/SCell 202B may notify, via the MBS-SIB, the UE 100 that the MCCH (MTCH configuration information) of the SCG 201B/SCell 202B is transmitted from the MCG 201A/PCell 202A. Here, the SCG 201B/SCell 202B may transmit, via the MBS-SIB, the MCCH configuration information of the MCG 201A/PCell 202A. Thus, the UE 100 can smoothly receive the MCCH of MCG 201A/PCell 202A.

The MCCH configuration information includes a configuration related to the MCCH, for example, at least one selected from the group consisting of a repetition period, an offset, a first subframe, a duration, a modification period, and scheduling info (on-duration, DRX inactivity timer, scheduling period, start offset). The MCCH configuration information may include at least one selected from the group consisting of the frequency of the MCCH of the MCG 201A/PCell 202A, the ID of the cell providing the MCCH of the MCG 201A/PCell 202A, BWP information/CFR information of the MCCH of the MCG 201A/PCell 202A, and MBS session information.

In response to reception of the MBS-SIB from the SCG 201B/SCell 202B, the UE 100 may start monitoring the MCCH of the MCG 201A/PCell 202A based on the MBS-SIB.

In step S203, the MCG 201A/PCell 202A may notify, via the MBS-SIB, the UE 100 that the MCCH of MCG 201A/PCell 202A includes the MBS configuration information (MTCH configuration information) of the SCG 201B/SCell 202B. Here, the MCG 201A/PCell 202A may notify the UE 100 of at least one selected from the group consisting of the frequency of the SCG 201B/SCell 202B at which the MBS is provided, the ID of the cell of the SCG 201B/SCell 202B providing the MBS, BWP/CFR information of the SCG 201B/SCell 202B regarding the BWP/CFR in which the MBS is provided, and the MBS session information, by MBS-SIB.

In step S204, the MCG 201A/PCell 202A transmits the MBS configuration information (MTCH configuration information) of the SCG 201B/SCell 202B on the MCCH. The MBS configuration information includes, for example, information of each MTCH of the SCG 201B/SCell 202B (for example, MBS session information, G-RNTI, and MTCH scheduling info (DRX configuration)) and a neighbor cell list of neighbor cells providing the MBS session. The MBS configuration may include at least one selected from the group consisting of the frequency of the SCG 201B/SCell 202B at which the MBS is provided, the ID of the cell of the SCG 201B/SCell 202B providing the MBS, and the BWP/CFR information of SCG 201B/SCell 202B regarding the BWP/CFR in which the MBS is provided.

The UE 100 acquires the MCCH on the MCG 201A/PCell 202A and receives the MTCH (MBS data) of the SCG 201B/SCell 202B based on the MBS configuration information (MTCH configuration information) acquired on the MCCH (step S205).

As described above, according to the second example, the MCG 201A/PCell 202A notifies the UE 100 of the MBS configuration information (MTCH configuration information) of the SCG 201B/SCell 202B, allowing the UE 100 to perform efficient MBS reception in the SCG 201B/SCell 202B. For example, for the MCCH reception, the UE 100 may monitor the MCCH only for the MCG 201A/PCell 202A, and need not monitor the MCCH of the SCG 201B/SCell 202B, enabling a reduction in the power consumption of the UE 100.

### (3) Third Example

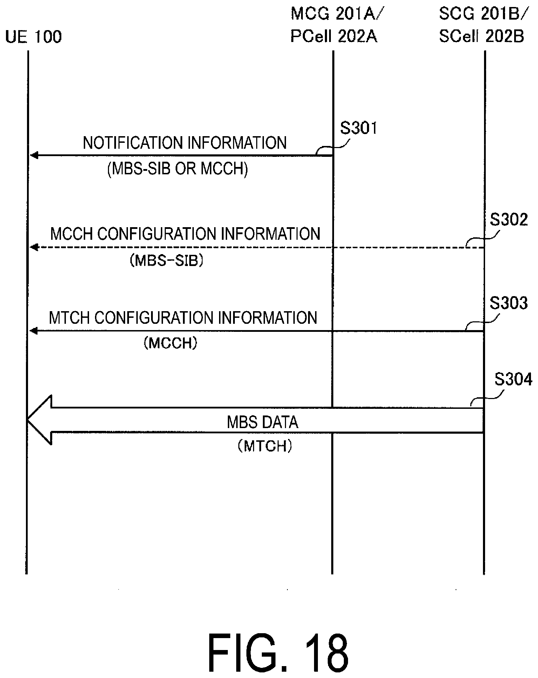

FIG. 18 is a diagram illustrating a third example. Here, DC or CA is assumed to have been started.

In step S301, the MCG 201A/PCell 202A notifies, via the MBS-SIB (or MCCH), the UE 100 that the MBS configuration information regarding the MBS session provided by the SCG 201B/SCG 202B is transmitted from the SCG 201B/SCell 202B. Here, the MCG 201A/PCell 202A may notify, via the MBS-SIB (or the MCCH), the UE 100 of the MCCH configuration information of the SCG 201B/SCell 202B. The MCG 201A/PCell 202A may notify the UE 100 of at least one selected from the group consisting of the frequency information of the MCCH of the SCG 201B/SCell 202B, the ID of the cell of providing the MCCH of the SCG 201B/SCell 202B, the BWP/CFR information of the MCCH of the SCG 201B/SCell 202B, and the MBS session information.

In step S302, the UE 100 may receive the MBS-SIB (MCCH configuration information) on the MCG 201A/PCell 202A. The UE 100 need not receive the MBS-SIB on the MCG 201A/PCell 202A if the UE 100 has acquired the MCCH configuration information of the SCG 201B/SCell 202B from the MCG 201A/PCell 202A in step S301.

In step S303, the UE 100 receives the MCCH (MTCH configuration information) on the MCG 201A/PCell 202A based on the MCCH configuration information acquired in step S301 or S302.

In step S304, the UE 100 receives the MTCH (MBS data) on the SCG 201B/SCell 202B based on the MTCH configuration information acquired in step S303.

As described above, according to the third example, the MCG 201A/PCell 202A notifies the UE 100 that the MBS configuration information of the SCG 201B/SCell 202B is transmitted from the SCG 201B/SCell 202B. This allows the UE 100 to perform efficient MBS reception in the SCG 201B/SCell 202B.

### (4) Fourth Example

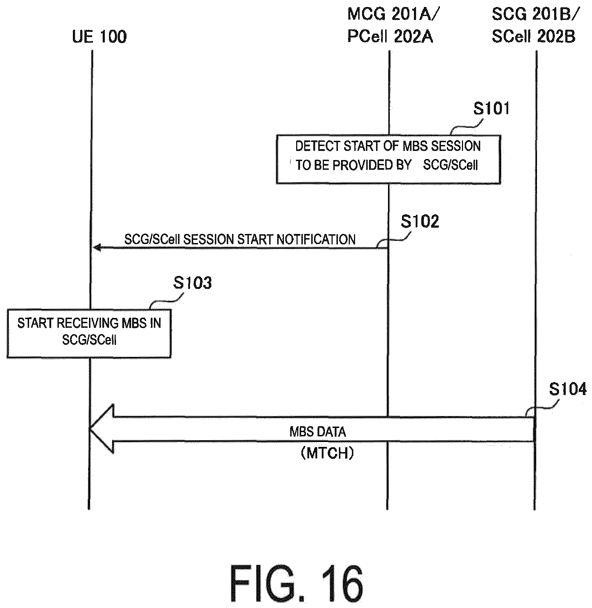

FIG. 19 is a diagram illustrating a fourth example. Here, DC or CA is assumed to have been started.

In step S401, the UE 100 is receiving or is interested in receiving the MBS session provided from the SCG 201B/SCell 202B.

In step S402, the UE 100 transmits, to the MCG 201A/PCell 202A, the MII indicating that the UE 100 is receiving or is interested in receiving the MBS session provided from the SCG 201B/SCell 202B. For example, the MII includes at least one selected from the group consisting of the MBS session information, the frequency and cell ID of the SCG 201B/SCell 202B, and information regarding whether the MBS session reception in the SCG 201B/SCell 202B is prioritized (for example, whether the same service can be received in the MCG 201A/PCell 202A).

In step S403, the MCG 201A/PCell 202A performs activation/deactivation control of the SCG 201B/SCell 202B based on the MII from UE 100. For example, the MCG 201A/PCell 202A performs control in such a manner as to avoid deactivating or to activate the cell of the SCG 201B/SCell 202B providing the MBS session that the UE 100 is receiving or is interested in receiving.

The MCG 201A/PCell 202A may configure the UE 100 with a new session or radio bearer used to perform MBS reception by the UE 100 in the MCG 201A/PCell 202A based on the MII from the UE 100. The MCG 201A/PCell 202A may perform handover control of the UE 100 based on the MII from the UE 100.

Thus, according to the fourth example, the UE 100 transmits, to MCG 201A/PCell 202A, the MII indicating that the UE 100 is receiving or is interested in receiving the MBS session provided by the SCG 201B/SCell 202B. Thus, the MCG 201A/PCell 202A can perform appropriate communication control in consideration of the MBS interest of the UE 100 for the SCG 201B/SCell 202B.

### (5) Fifth Example

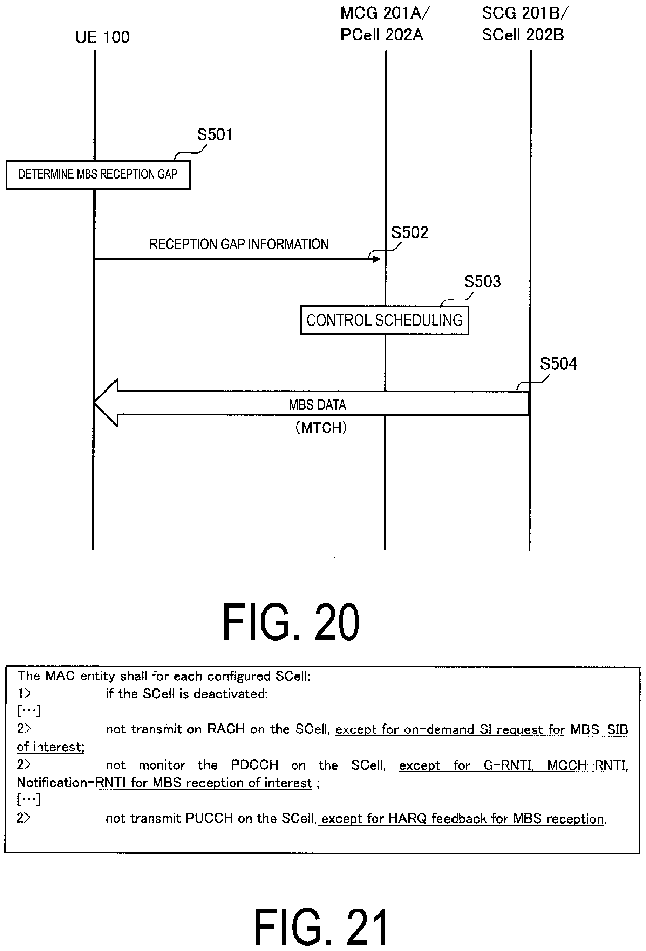

FIG. 20 is a diagram illustrating a fifth example. Here, DC or CA is assumed to have been started.

In step S501, the UE 100 that is receiving or is interested in receiving the MBS session provided by the SCG 201B/SCell 202B determines an MBS reception gap (MBS reception gap pattern) used to perform MBS reception from the SCG 201B/SCell 202B. The MBS reception gap may be the timing at which the MTCH is scheduled in the SCG 201B/SCell 202B. The MBS reception gap may include a switching time for RF switching (frequency switching for the reception device) in the UE 100.

In step S502, the UE 100 transmits, to the MCG 201A/PCell 202A, a message including reception gap information indicating the determined MBS reception gap. The reception gap information may be information indicating a reception gap pattern with a start timing and a bitmap pattern for the reception gap. The message including the reception gap information may include information regarding the ID and frequency of the cell of the SCG 201B/SCell 202B. The reception gap information may be information indicating the MBS reception gap that the UE 100 requests to configure. The MCG 201A/PCell 202A having received the message may configure the UE 100 with the MBS reception gap, for example, via an RRC Reconfiguration message based on the reception gap information.

In step S503, the MCG 201A/PCell 202A performs scheduling control in such a manner as to avoid providing a schedule for the UE 100 in the MBS reception gap. To be more specific, the MCG 201A/PCell 202A performs control in such a manner as to avoid unicast communication with the UE 100 at the timing (MBS reception gap) when the UE 100 performs MBS reception from the SCG 201B/SCell 202B.

In step S504, the UE 100 performs MBS reception from the SCG 201B/SCell 202B in the MBS reception gap. For example, in the MBS reception gap, the UE 100 receives the MBS data transmitted on the MTCH from the SCG 201B/SCell 202B.

In this way, according to the fifth example, the UE 100 notifies the MCG 201A/PCell 202A of the MBS reception gap (MBS reception gap pattern) used to perform MBS reception from the SCG 201B/SCell 202B. Thus, even with an insufficient number of reception devices in the UE 100, MBS reception from the SCG 201B/SCell 202B can be performed with connection with the MCG 201A/PCell 202A maintained.

Note that instead of the UE 100 notifying the MCG 201A/PCell 202A of the MBS reception gap (MBS reception gap pattern), the SCG 201B/SCell 202B may notify the MCG 201A/PCell 202A of the MTCH configuration information (MTCH scheduling information). Thus, based on the notification from the SCG 201B/SCell 202B, the MCG 201A/PCell 202A can recognize the timing at which the SCG 201B/SCell 202B performs MBS transmission and perform control in such a manner as to avoid unicast communication with the UE 100 at the timing.

Alternatively, instead of the UE 100 notifying the MCG 201A/PCell 202A of the MBS reception gap (MBS reception gap pattern), the UE 100 may transfer, to the MCG 201A/PCell 202A, the MTCH configuration information (MTCH scheduling information) acquired from the SCG 201B/SCell 202B. Thus, based on the information transferred from UE 100, the MCG 201A/PCell 202A can recognize the timing at which SCG 201B/SCell 202B performs MBS transmission and performs control in such a manner as to avoid unicast communication with the UE 100 at the timing.

### (6) Sixth Example

FIG. 21 illustrates operations of a MAC entity of the UE 100 according to a sixth example. FIG. 21 illustrates a modification of the technical specifications (TS38. 321) of the MAC-layer.

The SCell 202B configured for the UE 100 may be deactivated under the control of the PCell 202A. In general operations in CA, the UE 100 does not monitor the PDCCH of the deactivated SCell 202B. The UE 100 does not perform physical uplink control channel (PUCCH) transmission and random access channel (RACH) transmission to the deactivated SCell 202B. However, activation/deactivation of the SCell 202B in general CA assumes unicast communication. When the MBS supports CA, MBS reception is desirably enabled independently of activation/deactivation of the SCell 202B.

For example, when performing no monitoring of the PDCCH in the SCell 202B, the UE 100 does not perform PDCCH monitoring using the group RNTI (G-RNTI) used to receive the MTCH, and thus fails to receive the MTCH. Here, the G-RNTI corresponds to the RNTI for the MTCH.

When performing no PUCCH transmission in the SCell 202B, the UE 100 fails to perform HARQ feedback to the SCell 202B in the MBS reception. When performing no RACH transmission in the SCell 202B, the UE 100 fails to make an on-demand system information request (On-demand SI request) to the SCell 202B and to request the SCell 202B to transmit the MBS-SIB.

In the sixth example, as illustrated in FIG. 21, for each configured SCell 202B, if the SCell 202B is deactivated, the UE 100 performs the following operations.

The MAC entity of the UE 100 does not transmit on RACH on the SCell 202B, except for an on-demand SI request for the MBS-SIB of interest. In other words, even if the SCell 202B is deactivated, the UE 100 is allowed to transmit the RACH to the SCell 202B when making an on-demand SI request for the MBS-SIB of interest.

The MAC entity of the UE 100 does not monitor the PDCCH on the SCell 202B, except for the G-RNTI, MCCH-RNTI, and Notification-RNTI for MBS reception of interest. The MCCH-RNTI corresponds to the RNTI for MCCH, and the Notification-RNTI corresponds to the RNTI for a change notification. In other words, even if the SCell 202B is deactivated, the UE 100 is allowed to monitor the PDCCH on the SCell 202B using the G-RNTI, the MCCH-RNTI and the Notification-RNTI for MBS reception of interest.

The MAC entity of the UE 100 does not transmit the PUCCH on the SCell 202B, except for HARQ feedback for MBS reception. In other words, even if the SCell 202B is deactivated, the UE 100 is allowed to transmit the PUCCH to the SCell 202B when performing HARQ feedback for MBS reception.

Such an operation is related to CA, but the same and/or similar operation can be applied to DC. In the case of DC, the SCell 202B in the above operation is interpreted as the SCG 201B (or the PSCell of the SCG 201B).

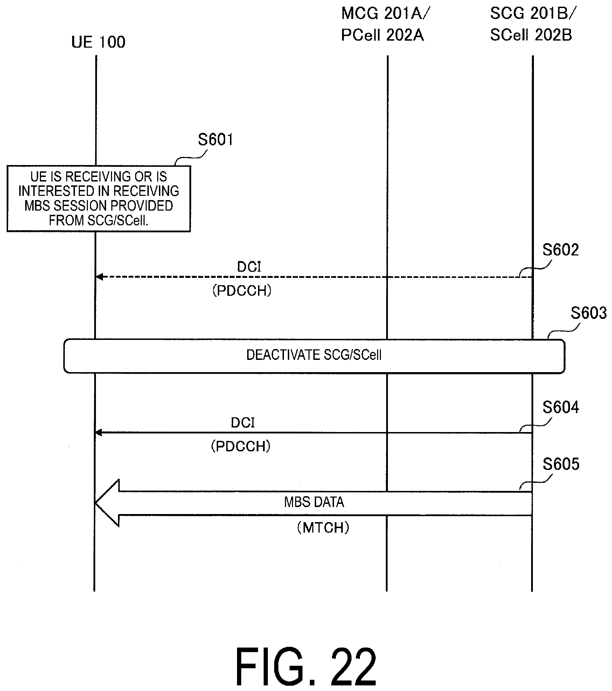

FIG. 22 is a diagram illustrating a sixth example. Here, operations related to PDCCH monitoring will be mainly described.

In step S601, the UE 100 is receiving or is interested in receiving the MBS session provided from the SCG 201B/SCell 202B.

In step S602, the UE 100 monitors the PDCCH (DCI) of the SCG 201B/SCell 202B using the G-RNTI, the MCCH-RNTI, and the Notification RNTI. The UE 100 may further monitor the SI-RNTI for MBS-SIB reception.

In step S603, the MCG 201A/PCell 202A deactivates the SCG 201B/SCell 202B, for example, by transmitting a deactivation instruction for the SCG 201B/SCell 202B to the UE 100 and SCG 201B/SCell 202B.

In step S604, even if the SCG 201B/SCell 202B is deactivated, the UE 100 continues to perform the PDCCH monitoring using the G-RNTI, the MCCH-RNTI, the Notification RNTI, and the SI-RNTI and receives the DCI from the SCG 201B/SCell 202B.

In step S605, the UE 100 receives the MTCH (MBS data) from the SCG 201B/SCell 202B based on the DCI received as a result of the PDCCH monitoring.

As described above, according to the fifth example, even if the SCG 201B/SCell 202B is deactivated, the UE 100 continues the PDCCH monitoring using the G-RNTI, the MCCH-RNTI, the Notification RNTI, and the SI-RNTI. Thus, continuity of MBS reception can be enhanced.

### (7) Seventh Example

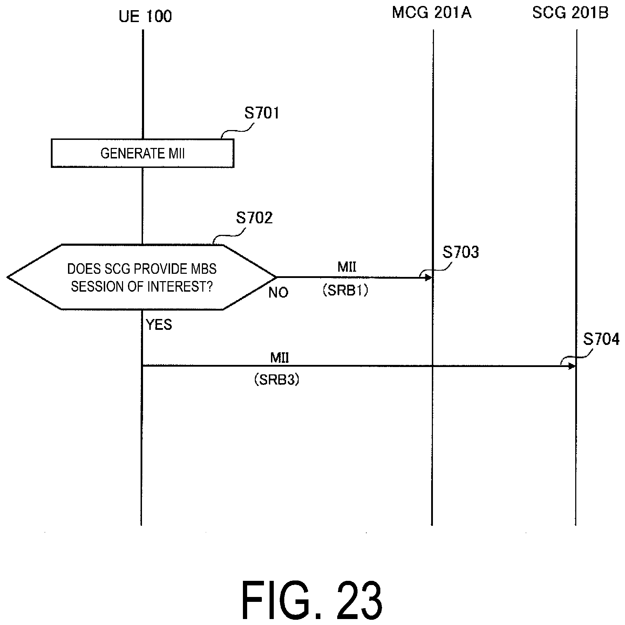

FIG. 23 is a diagram illustrating a seventh example. Here, operations performed in the case of DC will be described.

In step S701, the UE 100 (RRC layer) generates MII. The MII generated by the UE 100 is assumed to be an RRC message.

In step S702, the UE 100 (RRC layer) determines whether the MCG 201A or the SCG 201B provides the MBS session of interest.

In steps S703 and S704, the UE 100 transmits the MII to the CG providing the MBS session of interest. For example, the RRC layer of the UE 100 passes the MII to the MAC entity corresponding to the CG.

The RRC layer of the UE 100 transmits the MII through a signaling radio bearer (SRB) corresponding to the CG. For example, when the MCG 201A provides the MBS session of interest (step S702: NO), the RRC layer of UE 100 transmits the MII to MCG 201A by an SRB1 in step S703. The SRB1 is an SRB established between the UE 100 and the MCG 201A (MN 200A). On the other hand, when the SCG 201B provides the MBS session of interest (step S702: YES), the RRC layer of the UE 100 transmits the MII to the SCG 201B by an SRB3 in step S704. The SRB3 is an SRB established between the UE 100 and the SCG 201B (SN 200B).

Note that when both CGs provide the MBS session of interest (e.g., when the MCG 201A provides TMGI #1 and the SCG 201B provides TMGI #2), the UE 100 may transmit the MII to both CGs. Here, the UE 100 may transmit (a copy of) the same message to both CGs. The UE 100 may transmit separate messages (such as TMGI #1 related only/TMGI #2 related only) to respective corresponding CGs.

As described above, according to the seventh example, the UE 100 transmits the MII to the CG providing the MBS session of interest. For example, when the SCG 201B provides the MBS session of interest, the UE 100 transmits the MII to the SCG 201B by the SRB3. Thus, the MII can be transmitted to an appropriate transmission destination.

### (8) Eighth Example

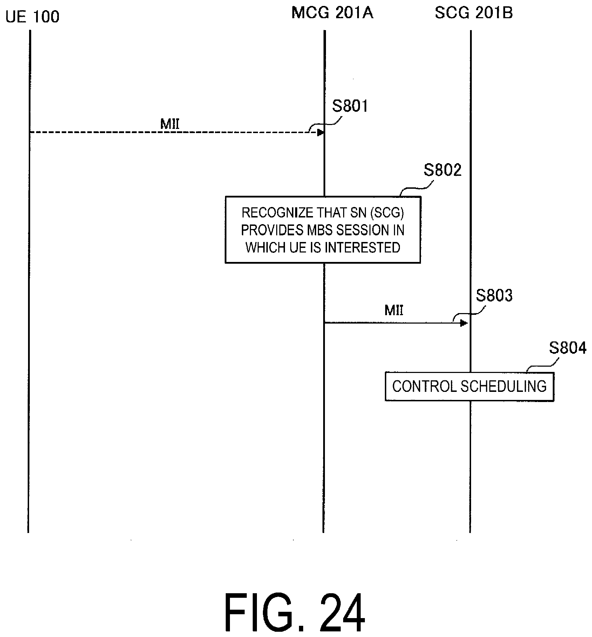

FIG. 24 is a diagram illustrating an eighth example. Here, operations performed in the case of DC will be described.

In step S801, the MCG 201A acquires the MBS interest information (MII) of the UE 100. For example, the MCG 201A receives the MII from the UE 100, or acquires the MII from the AMF 300 (core network).

In step S802, the MCG 201A (MN 200A) recognizes that the SCG 201B (SN 200B) provides the MBS session in which the UE 100 takes interest. Here, the AMF 300 (core network) and/or the SN 200B may provide the information of the MBS session provided by the SN 200B. Note that the information of the MBS session may be configured by Operation Administration and Maintenance (OAM). The MCG 201A (MN 200A) may identify the SCG 201B (SN 200B) from the information regarding the frequency at which the MBS session is provided.

In step S803, the MCG 201A (MN 200A) transmits the MII of the UE 100 to the SCG 201B (SN 200B). An Xn message (inter-base-station communication message) transmitted from the MN 200A to the SN 200B may include the MII. The Xn message may be an SN Addition message used at the start of DC and/or an SN Modification message used to change the configuration of the SCG 201B (SN 200B) after the start of DC. These messages may contain the MII as a UE context. The Xn message may be an X2 message.

Note that as described above, the MII includes at least one selected from the group consisting of the MBS session information (session ID, TMGI, G-RNTI, and the like), the MBS frequency information, the BWP (CFR) information, and the priority information for the MBS and unicast. The MII or the Xn message may include an MBS tunnel identifier related to a Multicast Broadcast User Plane Function (MB-UPF) of the core network and/or a UE identifier (XnAP UE-ID, or the like).

In step S804, the SCG 201B (SN 200B) schedules MBS transmission and unicast communication based on the Xn message (MII) received from the MCG 201A (MN 200A). For example, the SCG 201B (SN 200B) performs operations such as using scheduling to allocate unicast communication resources to the UE 100 while avoiding multicast. Based on the Xn message (MII), the SCG 201B (SN 200B) may transmit the MBS configuration information to the UE 100 via the RRC Reconfiguration message or the MCG 201A.

As described above, according to the eighth example, the MCG 201A (MN 200A) transmits the MII of the UE 100 to the SCG 201B (SN 200B). Thus, the SCG 201B (SN 200B) can perform appropriate communication control (scheduling and the like) of the UE 100 in consideration of the MBS interest of the UE 100.

### (9) Ninth Example

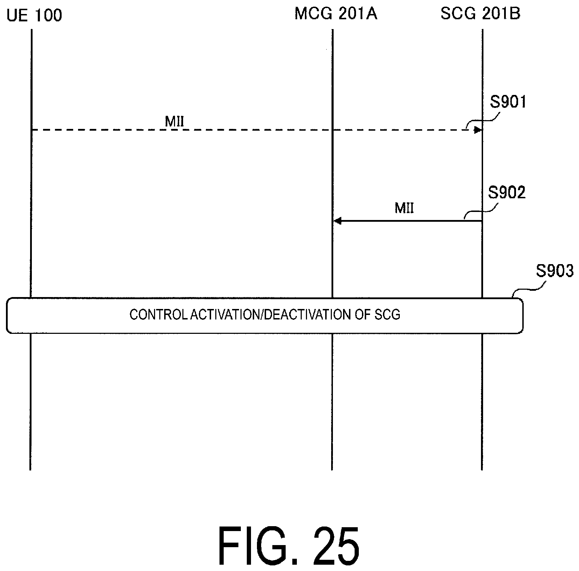

FIG. 25 is a diagram illustrating a ninth example. Here, operations performed in the case of DC will be described.

In step S901, the SCG 201B acquires the MBS interest information (MII) of the UE 100. For example, the SCG 201B receives the MII from the UE 100, or acquires the MII from the AMF 300 (core network).

In step S902, the SCG 201B (SN 200B) transmits the MII of the UE 100 to the MCG 201A (MN 200A). The SCG 201B (SN 200B) may transmit the MII to the MCG 201A (MN 200A) by using, as a trigger, the notification of the MII from the UE 100 or a query from the MN 200A.

The Xn message (inter-base-station communication message) transmitted from the SN 200B to the MN 200A may include the MII. The Xn message may be a gNB configuration update message related to a change in the configuration of the SN 200B, a response message to the SN Addition message, and/or a response message to the SN Modification message. These messages may contain the MII as a UE context. The information included in the MII and the Xn message is the same as, and/or similar to, the information in the eighth example described above. Note that the Xn message may be the X2 message.

In step S903, the MCG 201A (MN 200A) performs activation/deactivation control of the SCG 201B/SCell 202B based on the Xn message (MII) received from the SCG 201B (SN 200B). Based on the corresponding Xn message (MII), the MCG 201A (MN 200A) may configure the UE 100 with a new session or radio bearer for the UE 100 to perform MBS reception in the MCG 201A/PCell 202A.

### Other Embodiments

In the above-described embodiments and examples, DC may be multi-connectivity (MC). In MC, the UE 100 communicates with two or three or more base stations at the same time. For example, one master base station (MN) and two secondary base stations (SNs) communicate with three base stations at the same time.

In the above-described embodiments and examples, when the gNB 200 (MN 200A, SN 200B) includes a CU and a DU (that is, the gNB 200 is functionally divided into the CU and the DU) and both units are connected by the F1 interface, the CU that has acquired the MII of the UE 100 may notify the MII to the DU on the F1 interface. Thus, the scheduler provided in the DU can perform scheduling in consideration of the MII.

The operation flows described above can be separately and independently implemented, and also be implemented in combination of two or more of the operation flows. For example, some steps of one operation flow may be added to another operation flow or some steps of one operation flow may be replaced with some steps of another operation flow.

In the embodiments and examples described above, an example has been described in which the base station is an NR base station (gNB). However, the base station may be an LTE base station (eNB) or a 6G base station. The base station may be a relay node such as an Integrated Access and Backhaul (IAB) node. The base station may be a DU of the IAB node. The user equipment may be a Mobile Termination (MT) of the IAB node.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM. Circuits for executing processing performed by the UE 100 or the gNB 200 may be integrated, and at least a part of the UE 100 or the gNB 200 may be implemented as a semiconductor integrated circuit (chipset, system on a chip (SoC)).

The phrases "based on" and "depending on" used in the present disclosure do not mean "based only on" and "only depending on," unless specifically stated otherwise. The phrase "based on" means both "based only on" and "based at least in part on". Similarly, the phrase "depending on" means both "only depending on" and "at least partially depending on". "Obtain" or "acquire" may mean to obtain information from stored information, may mean to obtain information from information received from another node, or may mean to obtain information by generating the information. The terms "include", "comprise" and variations thereof do not mean "include only items stated" but instead mean "may include only items stated" or "may include not only the items stated but also other items". The term "or" used in the present disclosure is not intended to be "exclusive or". Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

Embodiments have been described above in detail with reference to the drawings, but specific configurations are not limited to those described above, and various design variation can be made without departing from the scope of the present invention as defined by the claims.

The present application claims priority to Japanese Patent Application No. 2021-119144 (filed on July 19, 2021).

### REFERENCE SIGNS

1: Mobile communication system
10: NG-RAN
20: 5GC
100: UE
110: Receiver
120: Transmitter
130: Controller
200: gNB
200A: MN
200B: SN
201A: MCG
201B: SCG
202A: PCell
202B: SCell
210: Transmitter
220: Receiver
230: Controller
240: Backhaul communicator
300: AMF/UPF

## Claims

1. A communication method used in a mobile communication system (1) supporting a multicast broadcast service, MBS, the communication method comprising the steps of:
communicating, by a user equipment (100) configured to perform carrier aggregation, CA, with a primary cell (202A) in the CA; and
performing, by the user equipment (100), MBS reception from a secondary cell (202B) while maintaining communication with the primary cell (202A) in the CA, wherein
the communicating comprises receiving, by the user equipment (100) from the primary cell (202A), MBS-related information regarding the MBS reception from the secondary cell (202B), the MBS-related information transmitted by the primary cell (202A) using a radio resource control, RRC, Reconfiguration message, wherein
the MBS-related information is MBS Traffic Channel, MTCH, configuration information regarding an MTCH in the secondary cell (202B).

2. The communication method according to claim 1, wherein
the MBS-related information received by the user equipment (100) further comprises at least one selected from the group consisting of MBS session information indicating an MBS session provided by the secondary cell (202B), frequency-related information regarding a frequency at which the MBS session is provided, MBS configuration information indicating a configuration of the MBS reception, and cell identification information indicating the secondary cell (202B).

3. A user equipment (100) comprising:
a controller (130) configured to perform control of carrier aggregation, CA,
a communicator configured to perform the CA, wherein
the communicator is configured to:
perform multicast broadcast service, MBS, reception from a secondary cell (202B) while maintaining communication with a primary cell (202A) in the CA, and
receive from the primary cell (202A) in the CA, MBS-related information regarding the MBS reception from the secondary cell (202B), the MBS-related information transmitted by the primary cell (202A) using a radio resource control, RRC, Reconfiguration message, wherein
the MBS-related information is MBS Traffic Channel, MTCH, configuration information regarding an MTCH in the secondary cell (202B).

4. A network apparatus (200) configured to support multicast broadcast service, MBS, comprising:
a controller (230) configured to manage a primary cell (202A) and a secondary cell (202B) in carrier aggregation, CA,
a communicator configured to communicate with a user equipment (100) that performs the CA, wherein
the communicator is configured to
perform MBS transmission to the user equipment (100) via the secondary cell (202B) while maintaining communication between the user equipment (100) and the primary cell (202A) in the CA, and
transmit to the user equipment (100) via the primary cell (202A) in the CA, MBS-related information regarding reception of the MBS from the secondary cell (202B), the MBS-related information transmitted by the primary cell (202A) using a radio resource control, RRC, Reconfiguration message, wherein
the MBS-related information is MBS Traffic Channel, MTCH, configuration information regarding an MTCH in the secondary cell (202B).

5. A mobile communication system (1) which supports a multicast broadcast service, MBS, and includes a user equipment (100) and a network apparatus (200), wherein
the user equipment (100) is configured to perform carrier aggregation, CA,
the user equipment (100) is configured to perform MBS reception from a secondary cell (202B) while maintaining communication with a primary cell (202A) in the CA, and
the network apparatus (200) is configured to transmit to the user equipment (100) via the primary cell (202A) in the CA, MBS-related information regarding the MBS reception from the secondary cell (202B), the MBS-related information transmitted by the primary cell (202A) using a radio resource control, RRC, Reconfiguration message, wherein
the MBS-related information is MBS Traffic Channel, MTCH, configuration information regarding an MTCH in the secondary cell (202B).

6. A computer program comprising instructions that, when the program is executed by a user equipment (100), cause the user equipment (100) to carry out the method of claim 1.

7. A chipset comprising means for carrying out the method of claim 1.

## Patentansprüche

1. Kommunikationsverfahren, das in einem Mobilkommunikationssystem (1) verwendet wird, das einen Multicast-Broadcast-Dienst, MBS, unterstützt, wobei das Kommunikationsverfahren die folgenden Schritte aufweist:
Kommunizieren, durch eine Benutzereinrichtung (100), die konfiguriert ist, um eine Trägeraggregation, CA, durchzuführen, mit einer Primärzelle (202A) in der CA; und
Durchführen, durch die Benutzereinrichtung (100), eines MBS-Empfangs von einer Sekundärzelle (202B), während die Kommunikation mit der Primärzelle (202A) in der CA aufrechterhalten wird, wobei
das Kommunizieren aufweist: Empfangen, durch die Benutzereinrichtung (100) von der Primärzelle (202A), von MBS-bezogenen Informationen bezüglich des MBS-Empfangs von der Sekundärzelle (202B), wobei die MBS-bezogenen Informationen von der Primärzelle (202A) unter Verwendung einer Funkressourcensteuerung-, RRC-, -Neukonfigurationsnachricht gesendet werden, wobei
die MBS-bezogenen Informationen MBS-Verkehrskanal-, MTCH-, -Konfigurationsinformationen bezüglich eines MTCH in der Sekundärzelle (202B) sind.

2. Kommunikationsverfahren gemäß Anspruch 1, wobei
die von der Benutzereinrichtung (100) empfangenen MBS-bezogenen Informationen ferner mindestens eines aufweisen ausgewählt aus der Gruppe bestehend aus MBS-Sitzungsinformationen, die eine durch die Sekundärzelle (202B) bereitgestellt MBS-Sitzung angeben, frequenzbezogenen Informationen bezüglich einer Frequenz, mit der die MBS-Sitzung bereitgestellt wird, MBS-Konfigurationsinformationen, die eine Konfiguration des MBS-Empfangs angeben, und Zellenidentifikationsinformationen, die die Sekundärzelle (202B) angeben.

3. Benutzereinrichtung (100), aufweisend:
eine Steuereinrichtung (130), die konfiguriert ist, um eine Steuerung einer Trägeraggregation, CA, durchzuführen,
einen Kommunikator, der konfiguriert ist, um die CA durchzuführen, wobei
der Kommunikator konfiguriert ist, um:
den Multicast-Broadcast-Dienst-, MBS-, -Empfang von einer Sekundärzelle (202B) durchzuführen, während die Kommunikation mit einer Primärzelle (202A) in der CA aufrechterhalten wird, und
von der Primärzelle (202A) in der CA MBS-bezogene Informationen bezüglich des MBS-Empfangs von der Sekundärzelle (202B) zu empfangen, wobei die MBS-bezogenen Informationen von der Primärzelle (202A) unter Verwendung einer Funkressourcensteuerung-, RRC-, -Neukonfigurationsnachricht gesendet werden, wobei
die MBS-bezogenen Informationen MBS-Verkehrskanal-, MTCH-, -Konfigurationsinformationen bezüglich eines MTCH in der Sekundärzelle (202B) sind.

4. Netzwerkvorrichtung (200), die konfiguriert ist, um den Multicast-Broadcast-Dienst, MBS, zu unterstützen, aufweisend:
eine Steuereinrichtung (230), die konfiguriert ist, um eine Primärzelle (202A) und eine Sekundärzelle (202B) bei der Trägeraggregation, CA, zu verwalten,
einen Kommunikator, der konfiguriert ist, um mit einer Benutzereinrichtung (100) zu kommunizieren, die die CA durchführt, wobei
der Kommunikator konfiguriert ist, um
eine MBS-Übertragung an die Benutzereinrichtung (100) über die Sekundärzelle (202B) durchzuführen, während die Kommunikation zwischen der Benutzereinrichtung (100) und der Primärzelle (202A) in der CA aufrechterhalten wird, und
an die Benutzereinrichtung (100) über die Primärzelle (202A) in der CA MBS-bezogene Informationen bezüglich des Empfangs des MBS von der Sekundärzelle (202B) zu senden, wobei die MBS-bezogenen Informationen von der Primärzelle (202A) unter Verwendung einer Funkressourcensteuerung-, RRC-, -Neukonfigurationsnachricht gesendet werden, wobei
die MBS-bezogenen Informationen MBS-Verkehrskanal-, MTCH-, -Konfigurationsinformationen bezüglich eines MTCH in der Sekundärzelle (202B) sind.

5. Mobilkommunikationssystem (1), das einen Multicast-Broadcast-Dienst, MBS, unterstützt und eine Benutzereinrichtung (100) und eine Netzwerkvorrichtung (200) aufweist, wobei
die Benutzereinrichtung (100) konfiguriert ist, um eine Trägeraggregation, CA, durchzuführen,
die Benutzereinrichtung (100) konfiguriert ist, um den MBS-Empfang von einer Sekundärzelle (202B) durchzuführen, während die Kommunikation mit einer Primärzelle (202A) in der CA aufrechterhalten wird, und
die Netzwerkvorrichtung (200) konfiguriert ist, um über die primäre Zelle (202A) in der CA MBS-bezogene Informationen bezüglich des MBS-Empfangs von der Sekundärzelle (202B) an die Benutzereinrichtung (100) zu senden, wobei die MBS-bezogenen Informationen von der Primärzelle (202A) unter Verwendung einer Funkressourcensteuerung-, RRC-, -Neukonfigurationsnachricht gesendet werden, wobei
die MBS-bezogenen Informationen MBS-Verkehrskanal-, MTCH-, Konfigurationsinformationen bezüglich eines MTCH in der Sekundärzelle (202B) sind.

6. Computerprogramm, aufweisend Befehle, die, wenn das Programm von einer Benutzereinrichtung (100) ausgeführt wird, bewirken, dass die Benutzereinrichtung (100) das Verfahren gemäß Anspruch 1 durchführt.

7. Chipsatz, aufweisend Mittel zum Durchführen des Verfahrens gemäß Anspruch 1.

## Revendications

1. Procédé de communication utilisé dans un système de communication mobile (1) supportant un service de diffusion multidiffusion, MBS, ledit procédé de communication comprenant les étapes suivantes :
la communication, par un équipement utilisateur (100) configuré pour effectuer une agrégation de porteuses, CA, avec une cellule primaire (202A) dans la CA ; et
l'exécution, par l'équipement utilisateur (100), d'une réception MBS depuis une cellule secondaire (202B) tout en maintenant la communication avec la cellule primaire (202A) dans la CA, dans lequel
la communication comprend la réception, par l'équipement utilisateur (100) depuis la cellule primaire (202A), d'informations relatives au MBS concernant la réception MBS depuis la cellule secondaire (202B), les informations relatives au MBS étant transmises par la cellule primaire (202A) en utilisant un message de reconfiguration de contrôle de ressources radio, RRC, dans lequel
les informations relatives au MBS sont des informations de configuration de canal de trafic MBS, MTCH, concernant un MTCH dans la cellule secondaire (202B).

2. Procédé de communication selon la revendication 1, dans lequel
les informations relatives au MBS reçues par l'équipement utilisateur (100) comprennent en outre au moins un élément choisi dans le groupe constitué d'informations de session MBS indiquant une session MBS fournie par la cellule secondaire (202B), d'informations relatives à la fréquence par rapport à une fréquence à laquelle la session MBS est fournie, d'informations de configuration MBS indiquant une configuration de la réception MBS, et d'informations d'identification de cellule indiquant la cellule secondaire (202B).

3. Équipement utilisateur (100), comprenant :
un contrôleur (130) configuré pour effectuer un contrôle d'agrégation de porteuses, CA,
un communicateur configuré pour effectuer la CA, dans lequel
le communicateur est configuré pour :
effectuer la réception de service de diffusion multidiffusion, MBS, depuis une cellule secondaire (202B) tout en maintenant la communication avec une cellule primaire (202A) dans la CA, et
recevoir de la cellule primaire (202A) dans la CA des informations relatives au MBS concernant la réception MBS depuis la cellule secondaire (202B), lesdites informations relatives au MBS étant transmises par la cellule primaire (202A) en utilisant un message de reconfiguration de contrôle de ressources radio, RRC, dans lequel
les informations relatives au MBS sont des informations de configuration de canal de trafic MBS, MTCH, concernant un MTCH dans la cellule secondaire (202B).

4. Appareil de réseau (200) configuré pour supporter le service de diffusion multidiffusion, MBS, comprenant :
un contrôleur (230) configuré pour gérer une cellule primaire (202A) et une cellule secondaire (202B) dans l'agrégation de porteuses, CA,
un communicateur configuré pour communiquer avec un équipement utilisateur (100) qui effectue la CA, dans lequel
le communicateur est configuré pour
effectuer une transmission MBS vers l'équipement utilisateur (100) via la cellule secondaire (202B) tout en maintenant la communication entre l'équipement utilisateur (100) et la cellule primaire (202A) dans la CA, et
transmettre à l'équipement utilisateur (100) via la cellule primaire (202A) dans la CA des informations relatives au MBS concernant la réception MBS depuis la cellule secondaire (202B), lesdites informations relatives au MBS étant transmises par la cellule primaire (202A) en utilisant un message de reconfiguration de contrôle de ressources radio, RRC, dans lequel
les informations relatives au MBS sont des informations de configuration de canal de trafic MBS, MTCH, concernant un MTCH dans la cellule secondaire (202B).

5. Système de communication mobile (1) qui supporte un service de diffusion multidiffusion, MBS, et comprenant un équipement utilisateur (100) et un appareil de réseau (200), dans lequel
l'équipement utilisateur (100) est configuré pour effectuer une agrégation de porteuses, CA,
l'équipement utilisateur (100) est configuré pour effectuer la réception MBS depuis une cellule secondaire (202B) tout en maintenant la communication avec une cellule primaire (202A) dans la CA, et
l'appareil de réseau (200) est configuré pour transmettre à l'équipement utilisateur (100), via la cellule primaire (202A) dans la CA, des informations relatives au MBS concernant la réception MBS depuis la cellule secondaire (202B), lesdites informations relatives au MBS étant transmises par la cellule primaire (202A) en utilisant un message de reconfiguration de contrôle de ressources radio, RRC, dans lequel
les informations relatives au MBS sont des informations de configuration de canal de trafic MBS, MTCH, concernant un MTCH dans la cellule secondaire (202B).

6. Programme informatique comprenant des instructions qui, lorsque le programme est exécuté par un équipement utilisateur (100), amènent l'équipement utilisateur (100) à mettre en œuvre le procédé selon la revendication 1.

7. Jeu de puces comprenant des moyens pour mettre en œuvre le procédé selon la revendication 1.
